# EUROPÄISCHE PATENTSCHRIFT

(11) **EP 0 959 674 B1**
(45) Veröffentlichungstag und Bekanntmachung des Hinweises auf die Patenterteilung: **27.09.2000**
(21) Anmeldenummer: 97920509.3
(22) Anmeldetag: 06.03.1997
(51) Int. Cl.: A01K 51/00, A01M 13/00, A01M 1/20

(54) **VERFAHREN UND VORRICHTUNG ZUM VERDUNSTEN VON FLÜSSIGKEITEN, INSBESONDERE VON AMEISENSÄURE**
PROCESS AND DEVICE FOR EVAPORATING LIQUIDS, IN PARTICULAR FORMIC ACID
PROCEDE ET DISPOSITIF POUR L'EVAPORATION DE LIQUIDES, NOTAMMENT DE L'ACIDE FORMIQUE

(30) Priorität: 06.03.1996 DE 19610649; 14.05.1996 DE 19621149; 25.10.1996 DE 19645300
(43) Veröffentlichungstag der Anmeldung: 01.12.1999
(73) Patentinhaber: Weiland, Joachim, 15366 Dahlwitz-Hoppegarten (DE)
(72) Erfinder: BECKER, Bruno, D-16515 Nassenheide (DE)
(74) Vertreter: Riemann, Bernd
(86) Internationale Anmeldenummer: DE9700512
(87) Internationale Veröffentlichungsnummer: WO9732470

(56) Entgegenhaltungen:
- DD-A- 292 141

## Beschreibung

Die Erfindung betrifft ein Verfahren und eine Vorrichtung zum Verdunsten von Flüssigkeiten, insbesondere von Ameisensäure zur Bekämpfung von Varroamilben in Bienenwohnungen.

Der Begriff "Verdunstung" wird in den folgenden Darlegungen im Sinne eines langsamen Überganges einer Flüssigkeit in den gasförmigen Zustand bei weit unterhalb des Siedepunktes der Verdunstungsflüssigkeit liegenden Temperaturen verwendet.

Aus der DD 292 141 B5 ist bereits eine Vorrichtung zum Verdunsten von Flüssigkeiten, insbesondere von Ameisensäure bekannt, die aus einem im wesentlichen quaderförmigen Behälter besteht, der durch eine vertikale Mittelwand in zwei Behälterteile unterteilt ist. Dabei ist der erste Behälterteil als allseitig geschlossener Vorratsraum zur Aufnahme der Verdunstungsflüssigkeit ausgelegt. Der zweite Behälterteil ist stufenförmig abgesetzt und zur Aufnahme eines plattenförmigen Verdunstungselementes vorgesehen, das über einen Schlitz in einem Deckel in vertikaler Lage positioniert ist und dessen untere Stirnfläche auf der Bodenfläche aufliegt. Im unteren Teil der vertikalen Mittelwand ist eine spaltförmige Durchlaßöffnung ausgebildet, die eine Verbindung in Nähe der gemeinsamen Bodenfläche zwischen beiden Behälterteilen herstellt.
Die Wirkungsweise dieser bekannten Vorrichtung besteht darin, daß die Verdunstungsflüssigkeit aus dem Vorratsraum über die Durchlaßöffnung in den zweiten Behälterteil fließt und dort nur so hoch aufsteigt, bis die Flüssigkeit die Durchlaßöffnung verschließt. Ursache dafür ist, daß sich beim Abfließen der Flüssigkeit aus dem Vorratsraum ein Unterdruck ausbildet, der das weitere Ansteigen der Verdunstungsflüssigkeit im zweiten Behälterteil verhindert. Wird nun Verdunstungsflüssigkeit über das Verdunstungselement abgeführt, sinkt das Flüssigkeitsniveau im zweiten Behälterteil etwas, und es wird Luft in Form kleiner Luftblasen in den Vorratsraum eingesogen und der Unterdruck ausgeglichen, so daß wieder Flüssigkeit in den zweiten Behälterteil nachfließen kann. Diese steigt dann an, bis die Durchlaßöffnung wieder verschlossen ist, wodurch die Luftzufuhr unterbrochen wird. Auf diese Weise wird ein annähernd konstantes Flüssigkeitsniveau im zweiten Behälterteil erzielt, wodurch ein gleichmäßiger Förderstrom im Verdunstungselement gewährleistet wird, der vom unterschiedlichen Füllstand im Vorratsraum unabhängig ist.

Bekanntlich ist die Verdunstung einer Flüssigkeit von vielen Parametern abhängig. Wesentliche Einflußfaktoren sind die Größe, Form und Porosität der Oberfläche des Verdunstungselementes, der Luftdruck, die Luftfeuchtigkeit und die Luftzirkulation sowie die Temperatur.
Der Nachteil der bekannten Vorrichtung besteht darin, daß die abgegebene Verdunstungsrate (also Verdunstungsmenge pro Zeiteinheit) durch die Abhängigkeit von einem Teil der vorgenannten Umgebungsbedingungen, nämlich Luftdruck, Luftfeuchtigkeit, Luftzirkulation und Temperatur höchst unterschiedlich ist. Hinzu kommt, daß die Bekämpfung von Varroamilben mehrmals im Jahr und zu unterschiedlichen Jahreszeiten durchgeführt werden muß. In Deutschland erfolgt dieses erstmalig im Sommer, etwa August nach der letzten Honigernte und im Herbst, ca. September/Oktober. Daraus folgt, daß zum Zeitpunkt der Bekämpfung stets unterschiedliche äußere Umgebungsbedingungen vorliegen. Entscheidend für eine wirksame Bekämpfung ist jedoch eine ausreichende Konzentration von Ameisensäure in der Verdunstungsluft der Bienenwohnung. In Deutschland bestehen diesbezüglich Vorgaben für die Mindest- bzw. Höchstverdunstungsrate bezogen auf die Umgebungstemperatur, die im Herbst bei ca. 15 bis 20 °C etwa 10 ml/Tag und im Sommer bei ca. 25 bis 30 °C etwa 25 ml/Tag beträgt. Auch die Umgebungsbedingungen im Inneren der Bienenwohnung sind keinesfalls konstant.
Die Bienen versuchen innen immer eine gleichbleibende Temperatur zu halten, im Brutnest beispielsweise +35 °C. Bei höheren Außentemperaturen oder direkter Sonneneinstahlung wird die Luft in der Bienenwohnung dadurch gekühlt, daß eine bestimmte Anzahl von Bienen durch ihre Flügelbewegung, dem sogenannten "fächeln" einen gerichteten Luftstrom erzeugen, der durch eine Öffnung nach außen geleitet wird, während frische Luft in die Bienenwohnung nachströmt. Es ist also eine erhöhte Luftwechselrate zu verzeichnen, die die Konzentration von Ameisensäure in der Bienenwohnung herabsetzt.
Um die Nachteile der bekannten Vorrichtung zu kompensieren, hat man bisher für unterschiedliche Umgebungsbedingungen verschieden große Verdunstungselemente eingesetzt und zur Optimierung der Verdunstungsmenge Kontrollen während der Behandlung empfohlen. Diese Maßnahmen sind nicht nur kostenintensiv, sondern auch sehr aufwendig.
Ein weiterer Nachteil der bekannten Vorrichtung ist auch, daß die verdunstete Flüssigkeitsmenge in der Anfangsphase der Behandlung schnell ansteigt. Dieses hat zur Folge, daß Streß und Aggressivität der Bienen zunehmen, die das Leben der Königin gefährden können.

Aufgabe der vorliegenden Erfindung ist es, ein Verfahren und eine verbesserte Vorrichtung nach dem Oberbegriff der Patentansprüche 1, 2 und 3 zu schaffen, mit denen die Einflüsse der unterschiedlichen Umgebungsbedingungen auf das Verdunstungsverhalten reduziert werden, der jahreszeitliche Anwendungsbereich ohne Verwendung unterschiedlicher Größen von Verdunstungselementen erhöht und ein sehr langsamer Anstieg der Verdunstung in der Anfangsphase erzielt wird.

Diese Aufgabe wird durch die im Kennzeichen der Ansprüche 1, 2 und 3 genannten Merkmale gelöst. Zweckmäßige Ausgestaltungen der Vorrichtung sind in den Ansprüchen 4 bis 22 offenbart.

Die mit der Erfindung erzielten Vorteile werden wie folgt begründet:
Bei bekannten Verdunstern mit nur einem, in die Verdunstungsflüssigkeit eines Behälters eintauchenden Verdunstungselement wurde experimentell ermittelt, daß die Förderrate (also Flüssigkeitsmenge pro Zeiteinheit) bei einem vollständig gefüllten Behälter gegenüber einem fast entleerten Behälter erheblich unterschiedlich ist. Durch diese Abhängigkeit vom Flüssigkeitsniveau im Behälter ist neben den Umgebungsbedingungen eine weitere Einflußgröße auf das Verdunstungsverhalten gegeben. Diese Einflußgröße wird durch die Ausbildung des Vorratsraumes in Verbindung mit der spaltförmigen Durchlaßöffnung dahingehend eleminiert, daß im Dosierraum ein konstantes Niveau von Verdunstungsflüssigkeit erzeugt wird, in dem das Verdunstungselement stets gleich tief eingetaucht ist. Durch die Verwendung von zwei Verdunstungselementen, die aus dem Dosierraum mit Verdunstungsflüssigkeit versorgt werden, wird der Hauptkapillarstrom in zwei Teilkapillarströme aufgeteilt. Der erste Teilkapillarstrom steigt über das erste Verdunstungselement vertikal nach oben und verdunstet entsprechend der gegebenen Umgebungsbedingungen. Beispielsweise wird bei höherer Temperatur oder Luftzirkulation mehr Flüssigkeit verdunstet als bei niedrigerer Temperatur oder Luftzirkulation. Da das erste Verdunstungselement im unmittelbaren Kontakt mit dem Flüssigkeitsniveau im Dosierraum steht, wird es entsprechend der bereits verdunsteten Flüssigkeitsmenge stets weitere Verdunstungsflüssigkeit nachziehen. Die Flüssigkeitsmenge pro Zeiteinheit des ersten Teilkapillarstromes verändert sich also in Abhängigkeit von den Umgebungsbedingungen. Durch die U-förmige Ausbildung des zweiten Verdunstungselementes wird der zweite Teilkapillarstrom durch die Einwirkung der Kapillarität und Schwerkraft in einen tiefer liegenden Verdunstungsraum umgeleitet, wo die Flüssigkeit vom längeren Schenkel auf ein drittes Verdunstungselement abtropft bzw. an dieses Element abgegeben wird. Dabei entsteht ein feuchter Fleck aus Verdunstungsflüssigkeit. Da aber das dritte Verdunstungselement vom zweiten Verdunstungselement in einem solchen Abstand angeordnet ist, der eine gegenseitige Berührung beider Elemente ausschließt, kann bei einer Verdunstung des Flüssigkeitsfleckes im Gegensatz zum ersten Verdunstungselement keine weitere Flüssigkeit nachgesaugt werden. Der zweite Teilkapillarstrom ist also konstant und von den Umgebungsbedingungen unabhängig, insbesondere dann, wenn das zweite Verdunstungselement mit einer zusätzlichen Beschichtung oder Abdeckung versehen ist. Die Größe des Flüssigkeitsfleckes auf dem dritten Verdunstungselement wird damit ausschließlich vom abtropfenden Flüssigkeitsstrom bestimmt. Setzt nun die Verdunstung des Flüssigkeitsfleckes entsprechend der gegebenen Umgebungsbedingungen ein, verringert sich dessen wirksame Verdunstungsfläche bis wieder neue Flüssigkeit abtropft. Bei entsprechender Auslegung des zweiten Verdunstungselementes ist es möglich, daß der Flüssigkeitsfleck völlig verdunstet, bevor wieder neue Flüssigkeit abtropft.
Da sich der Flüssigkeitsfleck auf dem dritten Verdunstungselement nur verzögert und gegebenenfalls in bestimmten Zeitintervallen ausbilden kann, wird insgesamt nur ein langsamer Anstieg der Verdunstung in der Anfangsphase erreicht. Die Wirkungen des ersten Verdunstungselementes und die Wirkungen des zweiten und dritten Verdunstungselementes ergänzen sich so, daß die Einflüsse der Umgebungsbedingungen reduziert werden und sich der jahreszeitliche Anwendungsbereich ohne Verwendung unterschiedlicher Größen von Verdunstungselementen erhöht.

Die Erfindung soll nachstehend an mehreren Ausführungsbeispielen näher erläutert werden. In den dazugehörigen Zeichnungen zeigen:
- Fig. 1 -: die Vorderansicht der Verdunstungsvorrichtung gemäß einer ersten Ausführungsform im Schnitt;
- Fig. 2 -: den Schnitt A - A gemäß Fig. 1;
- Fig. 3 -: die Vorderansicht der Verdunstungsvorrichtung gemäß einer zweiten Ausführungsform im Schnitt;
- Fig. 4 -: den Schnitt B - B gemäß Fig. 3;
- Fig. 5 -: die Vorderansicht der Verdunstungseinrichtung gemäß einer dritten Ausführungsform im Schnitt;
- Fig. 6 -: die Verdunstungsvorrichtung in Draufsicht nach Fig. 5;
- Fig. 7 -: die Vorderansicht nach Fig. 5 in gekippter Lage;
- Fig. 8 -: die Vorderansicht der Verdunstungsvorrichtung gemäß einer vierten Ausführungsform im Schnitt;
- Fig. 9 -: die Verdunstungsvorrichtung in Draufsicht nach Fig. 8;
- Fig. 10 -: die Vorderansicht der Verdunstungsvorrichtung gemäß einer fünften Ausführungsform teilweise im Schnitt;
- Fig. 11 -: den Schnitt C - C gemäß Fig. 10;
- Fig. 12 -: die Vorderansicht der Verdunstungsvorrichtung gemäß einer sechsten Ausführungsform im Schnitt;
- Fig. 13 -: den Schnitt D - D gemäß Fig. 12.

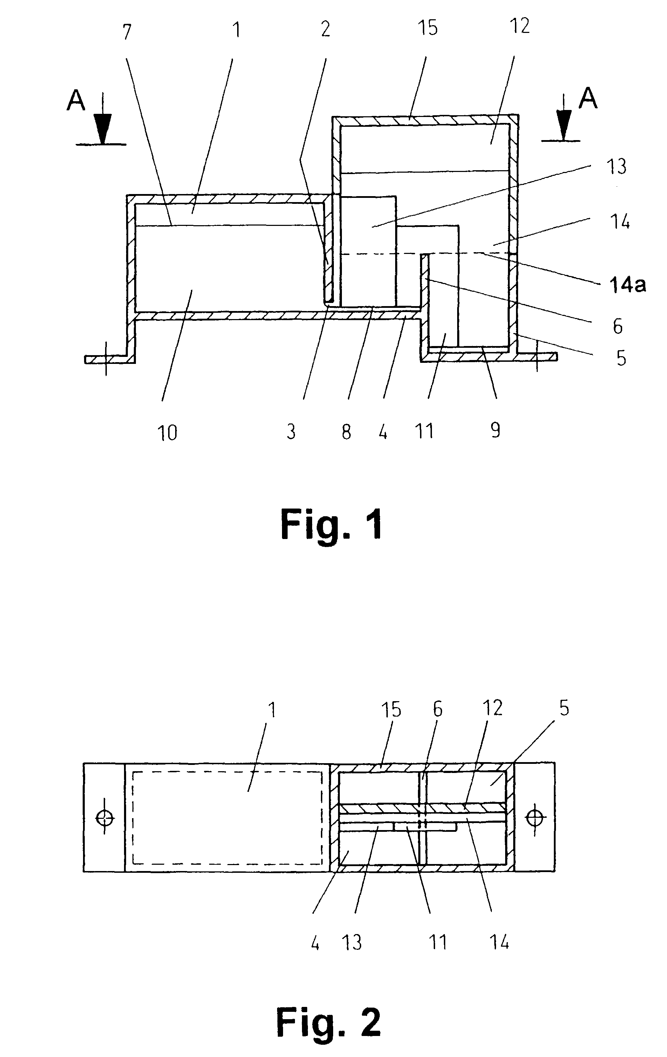

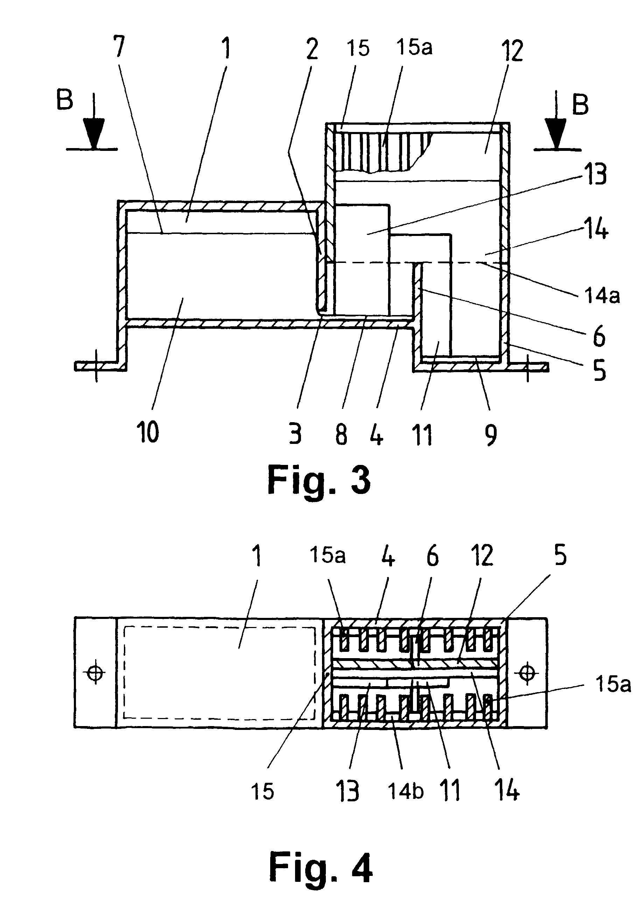

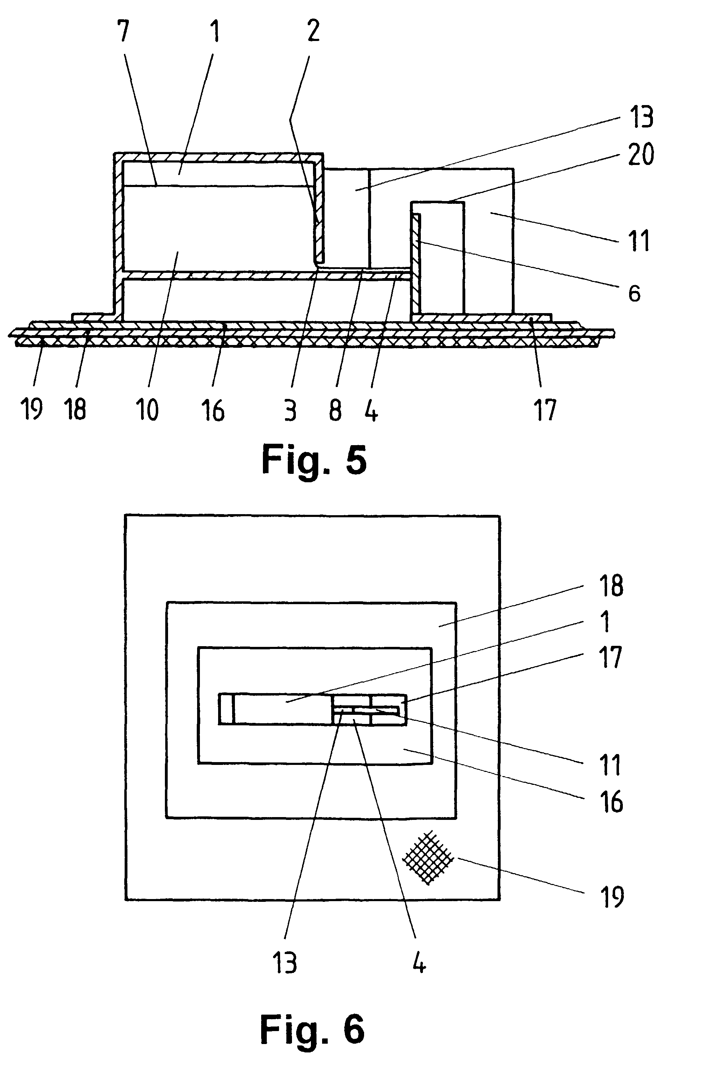

In Fig. 1 bis 4 sowie 12 und 13 ist eine erste Grundvariante und in Fig. 5 bis 11 eine zweite Grundvariante der erfindungsgemäßen Vorrichtung zum Verdunsten von Flüssigkeit dargestellt. Wie aus Fig. 1 bis 13 ersichtlich ist, besteht die Vorrichtung aus einem im wesentlichen quaderförmigen Behälter, der durch eine vertikale Mittelwand 2 in zwei Behälterteile unterteilt ist, die eine gemeinsame Bodenfläche aufweisen. Der erste Behälterteil ist allseitig geschlossen ausgebildet und dient als Vorratsraum 1 für die Verdunstungsflüssigkeit 10. Der zweite Behälterteil ist zum ersten Behälterteil stufenförmig abgesetzt und ist ein Dosierraum 4 für die Verdunstungsflüssigkeit 10. Der Vorratsraum 1 und der Dosierraum 4 sind über eine spaltförmige Durchlaßöffnung 3 miteinander verbunden, wodurch im Dosierraum 4 ein konstantes Flüssigkeitsniveau 8 erzeugt wird, das vom Flüssigkeitsniveau 7 im Vorratsraum 1 unabhängig ist. Wie sich dieses Flüssigkeitsniveau 8 im einzelnen ausbildet, wurde bereits in den einleitenden Darlegungen zur DD 292 141 B 5 erläutert.
Gemäß der in Fig. 1 bis 4 sowie 12 und 13 dargelegten ersten Grundvariante schließt sich in Längsrichtung an den zweiten Behälterteil ein dritter Behälterteil an, der als Verdunstungsraum 5 dient. Dieser Verdunstungsraum 5 ist mittels einer durchgehenden Querwand 6 vom Dosierraum 4 räumlich getrennt. Dabei liegt die Bodenfläche des Verdunstungsraumes 5 wesentlich tiefer als die Bodenfläche des Vorratsraumes 1 bzw. des Dosierraumes 4. Im Verdunstungsraum 5 ist eine Längswand 14 angeordnet, die sich von der Mittelwand 2 bis zur rechten Seitenwand des Verdunstungsraumes 5 erstreckt. Nach einer Ausführungsform ist der linke Teil dieser Längswand 14 durchgehend bis zur Bodenfläche des Dosierraumes 4 geführt, wobei die Länge der Durchlaßöffnung 3 durch die Längswand 14 begrenzt ist. Nach einer anderen Ausführungsform weist der linke Teil der Längswand 14 dagegen unten eine spaltförmige Öffnung auf und die Durchlaßöffnung 3 erstreckt sich über die gesamte Breite des Behälters. Vor der Längswand 14 ist ein erstes Verdunstungselement 13 und fluchtend daneben ein zweites Verdunstungselement 11 senkrecht angeordnet. Dieses zweite Verdunstungselement 11 ist mit einem rechteckigen Ausschnitt 20 versehen, so daß sich eine ungleichschenklige U-Form ergibt. Dabei ist der linke, sich auf der Bodenfläche des Dosierraumes 4 abstützende Schenkel wesentlich kürzer als der rechte Schenkel. Dieser rechte Schenkel muß nicht auf der Bodenfläche des Verdunstungsraumes 5 aufliegen; er kann auch kürzer ausgebildet sein, insbesondere dann, wenn man ein Abtropfen der Verdunstungsflüssigkeit 10 erzielen will. In weiterer Ausbildung der Erfindung ist hinter der Längswand 14 ein drittes Verdunstungselement 12 senkrecht angeordnet, das im wesentlichen die gleiche U-Form wie das zweite Verdunstungselement 11 aufweist und dessen längerer Schenkel auf der Bodenfläche des Verdunstungsraumes 5 aufliegt. In Anpassung an die Ausführungsform, bei der der linke Teil der Längswand 14 unten eine spaltförmige Öffnung besitzt, muß der kürzere Schenkel des dritten Verdunstungselementes 12 so kurz bemessen werden, daß er beim Kippen des Behälters, beispielsweise beim Transport nicht in das Flüssigkeitsniveau 8 des Dosierraumes 4 eintaucht. Nach einer zweckmäßigen Ausgestaltung dieser ersten Grundvariante ist der längere Schenkel des dritten Verdunstungselementes 12 rechtwinklig ausgestaltet. Dabei liegt der abgewinkelte Schenkelteil auf der Bodenfläche des Verdunstungsraumes 5 auf und ist bis unter den längeren Schenkel des zweiten Verdunstungselementes 11 geführt. Dabei muß der längere Schenkel des zweiten Verdunstungselementes 11 so verkürzt werden, daß sich die beiden Verdunstungselemente 11 und 12 nicht berühren. Bei der in Fig. 1 und 2 gezeigten ersten Ausführungsform ist der Dosierraum 4 und der Verdunstungsraum 5 oben durch eine Schutzhaube 15 abgedeckt. Diese Schutzhaube 15 ist lösbar mit dem Behältergehäuse verbunden, was zweckmäßigerweise über Rast- und Klemmelemente erfolgt. Die Schutzhaube 15 weist mehrere Öffnungen auf, deren Anzahl so bemessen ist, daß eine maximale Menge von verdunsteter Flüssigkeit hindurchtreten kann. Die Abmessungen dieser Öffnungen sind so ausgelegt, daß ein unmittelbarer Kontakt der Bienen mit den Verdunstungselementen 11, 12, 13 verhindert wird.
Bei der zweiten Ausführungsform (Fig. 3 und 4) ist die Schutzhaube 15 oben offen und besitzt ansonsten keine zusätzlichen Öffnungen. Um einerseits einen Berührungsschutz und andererseits eine bessere Positionierung der Verdunstungselemente 11, 12, 13 zu ermöglichen, sind vertikale Rippen 15a vorgesehen, die in einem Abstand von ca. 3,5 mm angeordnet sind. Diese Rippen 15a befinden sich im Zwischenraum zwischen der vorderen bzw. hinteren Längswand des Dosier- und Verdunstungsraumes 4 und 5 sowie der Vorder- bzw. Hinterwand der Schutzhaube 15 und den Verdunstungselementen 13, 11 bzw. 12. Diese Rippen 15a können entweder nur im Bereich der Schutzhaube 15 vorgesehen sein oder durchgehend von der Bodenfläche des Dosier- und Verdunstungsraumes 4 und 5 vertikal bis zur Oberkante der Schutzhaube 15 verlaufen. Die Rippen 15a können zweckmäßigerweise als einstückiges Distanzelement 14b ausgebildet sein, das in den vorgenannten Zwischenraum eingeschoben wird. Es ist aber auch möglich, daß sie als Bestandteil der Vorder- und Hinterwände des Dosier- und Verdunstungsraumes 4 und 5 und der Schutzhaube 15 ausgeformt sind oder nur an der Schutzhaube 15 vorgesehen sind.

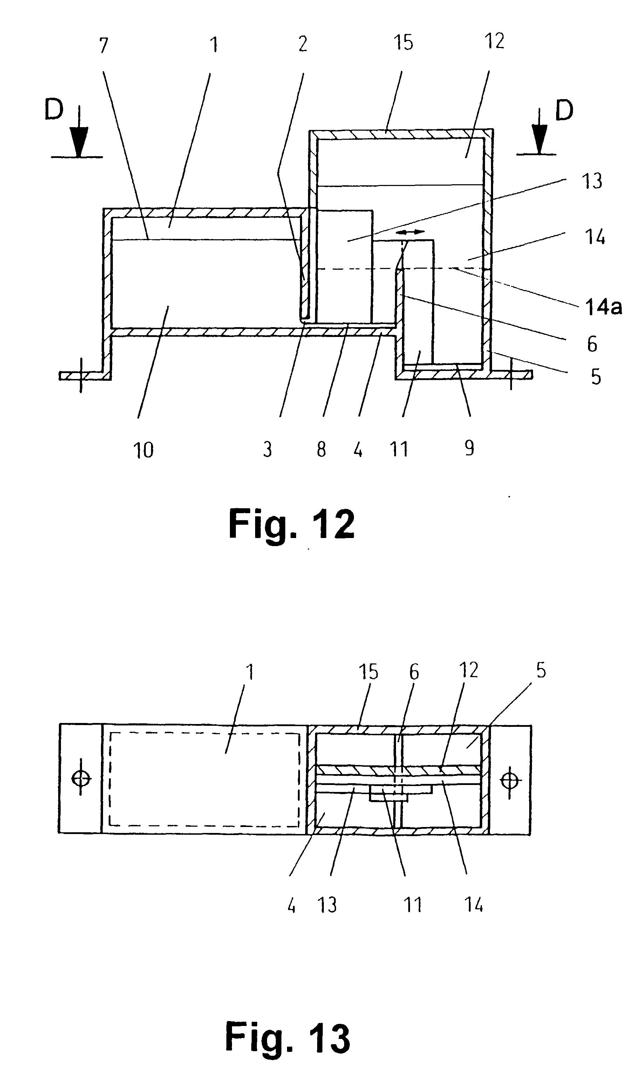

Die sechste Ausführungsform gemäß Fig. 12 und 13 unterscheidet sich von der ersten Ausführungsform (Fig. 1 und 2) dadurch, daß das zweite Verdunstungselement 11 aus zwei L-förmigen Einzelelementen besteht, deren kurze Schenkel sich in in einem gewissen Bereich überlappen und die horizontal verschiebbar sind. Dadurch, daß der eine Schenkel rechtwinklig und der andere Schenkel schräg ausläuft, ist der Querschnitt des zweiten Verdunstungselementes 11 einstellbar. Die äußeren Abmessungen der Vorrichtung sind so an die Erfordernisse üblicher Bienenwohnungen angepaßt, daß sie in einem Wabenleerrähmchen 25 befestigt und anstelle einer Wabe in der Bienenwohnung angebracht werden kann. In jedem Fall ist die Breite der Vorrichtung nicht größer als die Breite eines Wabenrähmchens 25. Da die von den Bienen konstant gehaltene Brutnesttemperatur einerseits zur Verdunstung beiträgt, andererseits aber ein unmittelbarer Kontakt zum Brutnest Brutschäden verursachen kann, wird die Vorrichtung vorrangig in der ersten brutfreien Wabengasse angeordnet.
Die in Fig. 5 bis 11 gezeigte zweite Grundvariante unterscheidet sich von der ersten Grundvariante dadurch, daß kein räumlich begrenzter Verdunstungsraum 5 vorgesehen, der untere Teil der Querwand 6 mit einer waagerechten Distanzplatte 17 verbunden und das dritte Verdunstungselement 16 waagerecht unter der Distanzplatte 17 und dem Behälter angeordnet ist. Dabei liegt die Distanzplatte 17 ebenfalls wesentlich tiefer als die gemeinsame Bodenfläche des Vorrats- bzw. Dosierraumes 1 und 4. Die Distanzplatte 17 ist mindestens im Bereich des längeren Schenkels mit siebartigen Öffnungen für den Flüssigkeitsdurchtritt versehen. Die Fläche des dritten Verdunstungselementes 16 ist größer als die Grundfläche der Vorrichtung. Unter dem dritten Verdunstungselement 16 ist weiterhin eine Abdeckung vorgesehen, die wiederum größer als die Fläche des dritten Verdunstungselementes 16 ist.

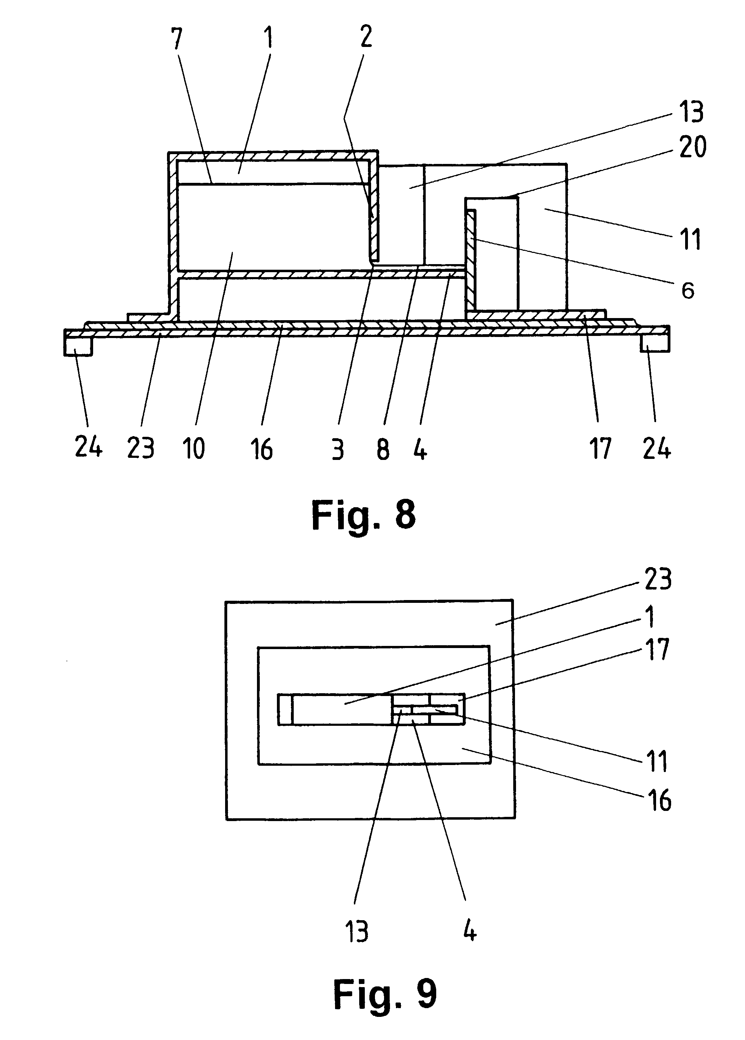

Bei der dritten Ausführungsform gemäß Fig. 5, 6 und 7 besteht diese Abdeckung aus einer säureresistenten Kunststoffolie 18 mit darunter angeordneter Gaze 19.
Bei der vierten Ausführungsform gemäß Fig. 8 und 9 besteht die Abdeckung hingegen aus einer säureresistenten Trennplatte 23, die mit Füßen 24 versehen ist.

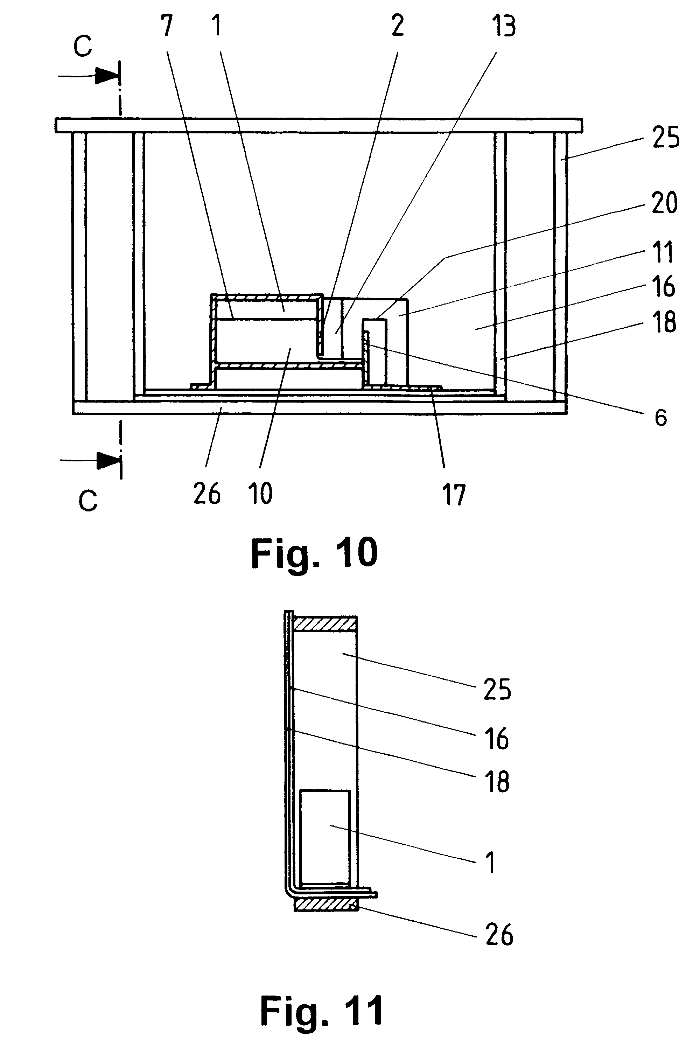

Die Abdeckung der fünften Ausführungsform gemäß Fig. 10 und 11 besteht nur aus der Trennfolie 18.

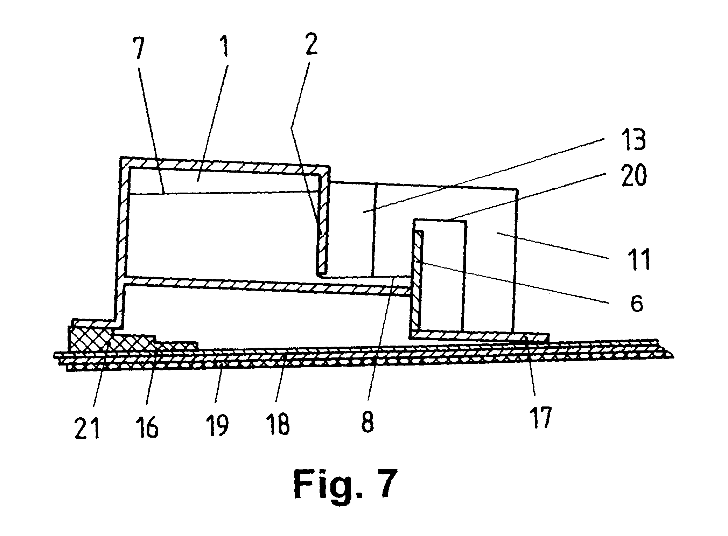

Aus Fig. 7 ist ersichtlich, daß an der linken Seitenwand des Vorratsraumes 1 eine Höhenverstelleinrichtung 21 vorgesehen sein kann, die es ermöglicht, die Vorrichtung zu kippen, wodurch das Flüssigkeitsniveau 8 im Dosierraum 4 für das Verdunstungselement 13 reduziert werden kann.
Die in Fig. 5 bis 9 gezeigten Ausführungsformen werden vorzugsweise dann verwendet, wenn in fortgeschrittener Jahreszeit der regulierende Einfluß des geschrumpften Brutnestes sehr gering geworden ist und Eingriffe in die Wabenordnung vermieden werden sollen, es aber andererseits wegen möglicher Reinfektion aus der Nachbarschaft wünschenswert ist, die letzte Behandlung des laufenden Jahres hinauszuschieben. Dabei wird die Vorrichtung in einem bienenfreien Raum, vorzugsweise oberhalb der Bienenwohnung angeordnet.

Hingegen ist die fünfte Ausführungsform für die Verwendung in sogenannten Hinterbehandlungsbeuten zwischen Fenster und letzter Wabe vorgesehen. Dazu ist die Vorrichtung auf dem unteren Schenkel (26) eines Wabenleerrähmchens 25 befestigt, wobei das dritte Verdunstungselement 16 und die Kunststoffolie 18 an einer Längsseite etwa bündig mit dem Schenkel 26 des Wabenleerrähmchens 25 abschließen und diese an der gegenüberliegenden Längsseite abgewinkelt und vertikal nach oben geführt sind. Die Kunststoffolie 18 weist analog zur ersten Ausführungsform ebenfalls Öffnungen auf.

Es hat sich für alle Ausführungsformen als sehr vorteilhaft erwiesen, wenn die Oberfläche des zweiten Verdunstungselementes 11 mit Ausnahme der Schenkelstirnflächen mit einer für die Verdunstungsflüssigkeit 10 undurchlässigen, säureresistenten Beschichtung oder Abdeckung versehen ist, die ein Lack oder ein Kunststoff sein kann. Diese Ausbildung verhindert ein Verdunsten des Kapillarstromes auf seinem Wege zum längeren Schenkel des zweiten Verdunstungselementes 11, das nunmehr nur noch eine reine Transportfunktion für die Verdunstungsflüssigkeit 10 ausführt.

## Patentansprüche

1. Verfahren zum Verdunsten von Flüssigkeiten, insbesondere von Ameisensäure zur Bekämpfung von Varroamilben in Bienenwohnungen, **dadurch gekennzeichnet,** daß
- in einem Behälter ein konstantes Niveau von Verdunstungsflüssigkeit erzeugt wird;
- der Hauptkapillarstrom aus Verdunstungsflüssigkeit, der sich in dem in die Verdunstungsflüssigkeit eintauchenden Verdunstungselement ausbildet, in zwei Teilkapillarströme aufgeteilt wird;
- der erste Teilkapillarstrom in vertikaler Richtung von der Verdunstungsflüssigkeit nach oben geleitet wird;
- der zweite Teilkapillarstrom erst vertikal nach oben, dann horizontal und danach vertikal nach unten in einem gegenüber dem Niveau der Verdunstungsflüssigkeit tiefer liegenden Bereich umgeleitet und dort eine Saugwirkung erzeugt wird;
- die Flüssigkeitsmenge pro Zeiteinheit des ersten Teilkapillarstromes in Abhängigkeit von den Umgebungsbedingungen, wie Luftdruck, Luftfeuchtigkeit, Luftzirkulation und Temperatur veränderbar gehalten wird
und
- die Flüssigkeitsmenge pro Zeiteinheit des zweiten Teilkapillarstromes konstant gehalten wird.

2. Vorrichtung zum Verdunsten von Flüssigkeiten, insbesondere von Ameisensäure zur Bekämpfung von Varroamilben in Bienenwohnungen, bestehend aus einem im wesentlichen quaderförmigen Behälter, der durch eine vertikale Mittelwand (2) in zwei, in einer horizontalen Ebene liegende Behälterteile unterteilt ist, wobei der erste Behälterteil als allseitig geschlossener Vorratsraum (1) zur Aufnahme der Verdunstungsflüssigkeit (10) ausgebildet ist, der zweite Behälterteil stufenförmig abgesetzt und mit einem Verdunstungselement (13) versehen ist, dessen untere Stirnfläche auf der Bodenfläche aufliegt, und beide Behälterteile über eine spaltförmige Durchlaßöffnung (3) im unteren Teil der vertikalen Mittelwand (2) in Verbindung stehen, **dadurch gekennzeichnet,** daß in Längsrichtung an den zweiten Behälterteil ein dritter Behälterteil als Verdunstungsraum (5) angeschlossen ist, der durch eine durchgehende Querwand (6) vom zweiten Behälterteil räumlich getrennt ist, wobei die Bodenfläche des Verdunstungsraumes (5) wesentlich tiefer als die gemeinsame Bodenfläche von Vorratsraum (1) und zweitem Behälterteil liegt und sich eine Längswand (14) von der vertikalen Mittelwand (2) bis zur rechten Seitenwand des Verdunstungsraumes (5) erstreckt, deren linker Teil, einen Dosierraum (4) für die Verdunstungsflüssigkeit (10) ausbildend bis zur Bodenfläche des zweiten Behälterteiles geführt sowie die Länge der spaltenförmigen Durchlaßöffnung (3) in der Mittelwand (2) entsprechend der Breite des Dosierraumes (4) ausgelegt ist und der rechte Teil der Längswand (14) im unteren Bereich mit einer spaltförmigen öffnung versehen ist, deren Breite größer als das Flüssigkeitsniveau (9) im Verdunstungsraum (5) ist und daß vor der Längswand (14) das erste Verdunstungselement (13) und fluchtend daneben ein zweites Verdunstungselement (11) mit einer ungleichschenkligen U-Form senkrecht angeordnet ist, wobei der linke, sich auf der Bodenfläche des Dosierraumes (4) abstützende Schenkel wesentlich kürzer als der sich auf der Bodenfläche des Verdunstungsraumes (5) abstützende rechte Schenkel ist und hinter der Längswand (14) ein drittes Verdunstungselement (12) senkrecht angeordnet ist, das im wesentlichen die gleiche Form wie das zweite Verdunstungselement (11) aufweist und dessen längerer Schenkel ebenfalls auf der Bodenfläche des Verdunstungsraumes (5) aufliegt sowie daß alle Verdunstungselemente (13, 11, 12) über auf den Bodenflächen ausgebildete Rippenabschnitte positioniert sind.

3. Vorrichtung zum Verdunsten von Flüssigkeiten, insbesondere von Ameisensäure zur Bekämpfung von Varroamilben in Bienenwohnungen, bestehend aus einem im wesentlichen quaderförmigen Behälter, der durch eine vertikale Mittelwand (2) in zwei, in einer horizontalen Ebene liegende Behälterteile unterteilt ist, wobei der erste Behälterteil als allseitig geschlossener Vorratsraum (1) zur Aufnahme der Verdunstungsflüssigkeit (10) ausgebildet ist, der zweite Behälterteil stufenförmig abgesetzt und mit einem Verdunstungselement (13) versehen ist, dessen untere Stirnfläche auf der Bodenfläche aufliegt, und beide Behälterteile über eine spaltförmige Durchlaßöffnung (3) im unteren Teil der vertikalen Mittelwand (2) in Verbindung stehen, **dadurch gekennzeichnet**, daß der zweite Behälterteil in Längsrichtung durch eine durchgehende Querwand (6) begrenzt ist, die einen Dosierraum (4) für die Verdunstungsflüssigkeit (10) ausgebildet, in dem fluchtend neben dem ersten Verdunstungselement (13) ein zweites Verdunstungselement (11) mit einer ungleichschenkligen U-Form senkrecht angeordnet ist, wobei der linke, sich auf der Bodenfläche des Dosierraumes (4) abstützende Schenkel wesentlich kürzer als der rechte Schenkel ist und der untere Teil der Querwand (6) mit einer waagerechten Distanzplatte (17) verbunden ist, die gegenüber der gemeinsamen Bodenfläche von Vorratsraum (1) und Dosierraum (4) wesentlich tiefer liegt, wobei der längere Schenkel des Verdunstungselementes (11) auf der Distanzplatte (17) aufliegt, die mindestens im Auflagebereich des längeren Schenkels mit siebartigen Öffnungen für den Flüssigkeitsdurchtritt versehen ist und daß unter der Distanzplatte (17) und dem Behälter ein drittes Verdunstungselement (16) waagerecht angeordnet ist, dessen Fläche größer als die Grundfläche des Behälters ist, wobei unter dem dritten Verdunstungselement (16) eine Abdekkung vorgesehen ist, die wiederum größer als die Fläche des dritten Verdunstungselementes (16) ist.

4. Vorrichtung nach Anspruch 2, **dadurch gekennzeichnet,** daß der linke Teil der Längswand (14) unten eine spaltförmige Öffnung aufweist, die Länge der Durchlaßöffnung (3) in der Mittelwand (2) der Breite des Behälters entspricht und der kürzere Schenkel des dritten Verdunstungselementes (12) so bemessen ist, daß er beim Kippen des Behälters, insbesondere beim Transport nicht in das Flüssigkeitsniveau (8) des Dosierraumes (4) eintaucht.

5. Vorrichtung nach Anspruch 2, **dadurch gekennzeichnet,** daß der längere Schenkel des dritten Verdunstungselementes (12) rechtwinklig ausgebildet, der abgewinkelte Schenkelteil unmittelbar unter dem längeren Schenkel des zweiten Verdunstungselementes (11) angeordnet und der längere Schenkel des zweiten Verdunstungselementes (11) so verkürzt ist, daß sich beide Verdunstungselemente (11, 12) nicht berühren und die Verdunstungsflüssigkeit (10) vom längeren Schenkel des zweiten Verdunstungselementes (11) abtropfen kann.

6. Vorrichtung nach Anspruch 2, **dadurch gekennzeichnet,** daß der Dosierraum (4) und der Verdunstungsraum (5) durch eine Schutzhaube (15) abgedeckt ist, die lösbar mit dem Behältergehäuse, vorzugsweise durch Rast- und Klemmelemente verbunden ist und die Öffnungen aufweist, deren Anzahl so bemessen ist, daß eine maximale Menge von verdunsteter Flüssigkeit hindurchtreten kann und deren Abmessungen so ausgelegt sind, daß ein unmittelbarer Kontakt der Bienen mit den Verdunstungselementen (11, 12, 13) verhindert wird.

7. Vorrichtung nach Anspruch 2, **dadurch gekennzeichnet,** daß bei einem oben offenem Dosierraum (4) sowie Verdunstungsraum (5) im Zwischenraum zwischen der vorderen bzw. hinteren Längswand des Dosier- und Verdunstungsraumes (4, 5) und/oder der vorderen bzw. hinteren Innenwand der Schutzhaube (15) und den Verdunstungselementen (13, 11 bzw. 12) vertikale Rippen (15a) vorgesehen sind, die bis zur Oberkante (14a) der Längswände des Dosier- und Verdunstungsraumes (4, 5) oder bis zur Oberkante der Schutzhaube (15) geführt sind, wobei die Rippen (15a) als lösbar angeordnetes, einstückiges Distanzelement (14b) ausgebildet oder an den vorderen und hinteren Innenwänden der Längswände und/oder der Schutzhaube (15) ausgeformt sind.

8. Vorrichtung nach Anspruch 3, **dadurch gekennzeichnet,** daß die Abdeckung eine säureresistente Kunststoffolie (18), eine säureresistente Trennplatte (23) oder eine säureresistente Kunststoffolie (18) mit darunter angeordneter Gaze (19) ist, wobei die Fläche der Gaze (19) größer als die der Kunststoffolie (18) bzw. Trennplatte (23) ist.

9. Vorrichtung nach Anspruch 3 und 8 zur Verwendung in Hinterbehandlungsbeuten, **dadurch gekennzeichnet**, daß die Vorrichtung auf dem unteren Schenkel (26) eines Wabenleerrähmchens (25) angeordnet ist und das unter der Distanzplatte (17) und dem Behälter befindliche dritte Verdunstungselement (16) mit der Kunststoffolie (18) an einer Längsseite etwa bündig mit dem Schenkel (26) des Wabenleerrähmchens (25) abschließt und diese an der gegenüberliegenden Längsseite abgewinkelt und vertikal nach oben geführt sind, wobei die Kunststoffolie (18) Öffnungen aufweist, deren Anzahl so bemessen ist, daß eine maximale Menge von verdunsteter Flüssigkeit hindurchtreten kann und deren Abmessungen so ausgelegt sind, daß ein unmittelbarer Kontakt der Bienen mit dem dritten Verdunstungselement (16) verhindert wird.

10. Vorrichtung nach Anspruch 2 oder 3, **dadurch gekennzeichnet,** daß die Oberfläche des zweiten Verdunstungselementes (11) mit Ausnahme der Stirnfläche der Schenkel mit einer für die Verdunstungsflüssigkeit (10) undurchlässigen, säureresistenten Beschichtung oder Abdeckung versehen ist.

11. Vorrichtung nach Anspruch 2 oder 3 und 10, **dadurch gekennzeichnet,** daß die Beschichtung ein Lack oder Kunststoff ist.

12. Vorrichtung nach Anspruch 2 oder 3, **dadurch gekennzeichnet,** daß der Querschnitt des zweiten Verdunstungselementes (11), vorzugsweise im horizontalen Mittelteil variierbar bzw. einstellbar ist.

13. Vorrichtung nach Anspruch 2 oder 3 und 12, **dadurch gekennzeichnet,** daß das zweite Verdunstungselement (11) aus zwei L-förmigen Einzelelementen besteht, deren kurze Schenkel in einem Bereich einander überlappend angeordnet sind und mindestens ein Einzelelement horizontal verschiebbar ist sowie daß der kurze Schenkel des einen Einzelelementes rechtwinklig und der des anderen Einzelelementes schräg ausläuft.

14. Vorrichtung nach Anspruch 2 oder 3, **dadurch gekennzeichnet,** daß das erste und zweite Verdunstungselement (13, 11) einstückig ausgebildet ist.

15. Vorrichtung nach Anspruch 2 oder 3, 5 sowie 10 bis 14, **dadurch gekennzeichnet,** daß die Querschnittsfläche der Verdunstungselemente (11, 12, 13) regelmäßig, insbesondere dreiekkig, viereckig, vieleckig, kreisförmig, kreisringförmig, kreisausschnittförmig, kreisabschnittförmig, ellipsenförmig oder unregelmäßig ist.

16. Vorrichtung nach Anspruch 2 oder 3, 5 sowie 10 bis 14, **dadurch gekennzeichnet,** daß der saugfähige Werkstoff der Verdunstungselemente (11, 12, 13, 16) aus organischen, anorganischen Stoffen oder Gemischen davon besteht.

17. Vorrichtung nach Anspruch 2 oder 3, 5, 10 bis 14 sowie 16, **dadurch gekennzeichnet,** daß der saugfähige Werkstoff der Verdunstungselemente (11, 12, 13, 16) Papier, Pappe, Keramik, Schaumstoff sowie gewebtes oder nicht gewebtes Textilgut, wie Filz, Vlies, Gespinst ist.

18. Vorrichtung nach Anspruch 2 oder 3, **dadurch gekennzeichnet,** daß der Behälter aus säurefesten und verschweißbaren Kunststoffen, vorzugsweise Polypropylen besteht.

19. Vorrichtung nach Anspruch 2 oder 3, **dadurch gekennzeichnet,** daß der Behälter durch Anordnung einer Höhenverstelleinrichtung (21) an der linken Seitenwand des Vorratsraumes (1) kippbar ausgestaltet ist.

20. Vorrichtung nach Anspruch 2 oder 3, **dadurch gekennzeichnet,** daß die Breite des Behälters nicht größer als die Breite eines Wabenrahmens ist.

21. Vorrichtung nach Anspruch 2 oder 3, **dadurch gekennzeichnet,** daß der Behälter ein Spritzgußteil ist, der eine Skala zur Messung der Menge von Verdunstungsflüssigkeit (10) im Vorratsraum (1), vorzugsweise am Deckel des Vorratsraumes (1) trägt, und der Deckel mit dem Gehäuse des Vorratsraumes (1) durch Schweißen luftdicht verbunden ist.

22. Vorrichtung nach Anspruch 2 oder 3, 5, 10 bis 14, 16 und 17, **dadurch gekennzeichnet,** daß die Verdunstungselemente (11, 12, 13) in einem beliebigen, auch veränderbaren. Winkel zur Vertikalachse bzw. Horizontalachse des Behälters angeordnet sind.

## Claims

1. A process for evaporating liquids, especially formic acid for combating varroa mites in beehives, wherein
- a constant level of liquid to be evaporated is produced in a container;
- the main capillary flow of evaporation liquid, which develops in the evaporation element submerged in the liquid for evaporation is divided into two partial capillary flows;
- the first partial capillary flow is directed vertically upward by the liquid evaporated;
- the second partial capillary flow is first directed vertically upward, then horizontally and next vertically downward into an area lower than the level of the liquid for evaporation, and a suction effect is produced there;
- the amount of liquid per unit of time of the first partial capillary flow is kept variable as a function of ambient conditions such as atmospheric pressure, atmospheric humidity, air circulation and temperature,
and
- the amount of liquid of the second partial capillary flow per unit of time is kept constant.

2. A device for evaporating liquids, especially formic acid for combating varroa mites in beehives, comprising an essentially cubical container subdivided by a vertical middle partition (2) into two container parts lying in one horizontal plane, where the first part of the container is designed as a storage chamber (1) that is closed on all sides to accommodate the liquid (10) for evaporation, the second part of the container is designed in steps and is provided with an evaporation element (13), whose lower end face rests on the bottom surface, and the two parts of the container are connected by a slot-shaped passage (3) in the lower part of the vertical middle partition (2), wherein a third container part is connected to the second container part in the longitudinal direction as the evaporation chamber (5) which is spatially separated from the second container part by a continuous transverse partition (6), with the bottom surface of the evaporation chamber (5) being much lower than the common bottom surface of the storage chamber (1) and the second part of the container, and with a longitudinal wall (14) extending from the vertical middle partition (2) to the right side wall of the evaporation chamber (5), the left part of which, forming a dispensing chamber (4) for the liquid (10) for evaporation, continues to the bottom surface of the second part of the container, and the length of the slot-shaped passage (3) in the middle partition (2) is designed according to the width of the dispensing chamber (4), and the right part of the longitudinal wall (14) is provided with a slot-shaped opening in the lower area, the width of said slot-shaped opening being greater than the liquid level (9) in the evaporation chamber (5), and the first evaporation element (13) is arranged in front of the longitudinal wall and a second evaporation element (11) is arranged perpendicular and flush next to the former, with a U shape having legs of irregular length, with the left leg, which is supported on the bottom surface of he dispensing chamber (4) being much shorter than the right leg which is supported on the bottom surface of the evaporation chamber (5), and behind and perpendicular to the longitudinal wall (14) is arranged a third evaporation element (12), which has essentially the same shape as the second evaporation element (11) and its longer leg is also in contact with the bottom surface of the evaporation chamber (5), and all the evaporation elements (11, 12, 13) are positioned over the rib sections formed on the bottom surfaces.

3. A device for evaporating liquids, especially formic acid, for combating varroa mites in beehives, comprising an essentially cube-shaped container subdivided by a vertical middle partition (2) into two container parts in one horizontal plane, with the first part of the container being designed as a storage chamber (1) that is closed on all sides to accommodate the liquid (10) for evaporation, the second part of the container being designed steps and provided with an evaporation element (13) whose lower end face rests on the bottom surface, and the two container parts are connected through a slot-shaped passage (3) in the lower part of the vertical middle partition (2), wherein the second container part is limited in the longitudinal direction by a continuous transverse partition (6), which forms a dispensing chamber (4) for the liquid (10) for evaporation, and in which a second evaporation element (11) is arranged flush next to the first evaporation element (13) and has a U shape with legs of irregular length, with the left leg which is supported on the bottom surface of the dispensing chamber (4) being much shorter than the right leg, and the bottom part of the transverse partition (6) being connected to a horizontal spacer plate (17) which is much lower than the common bottom surface of the storage chamber (1) and the dispensing chamber (4), with the longer leg of the evaporation element (11) resting on the spacer plate (17), which is provided with sieve-like openings for the liquid to pass through at least in the area of contact of the longer leg, and with a third evaporation element (16) being arranged horizontally beneath the spacer plate (17) and the container, the area of said evaporation element being larger than the base area of the container, with a cover being provided beneath the third evaporation element (16), said cover being larger in turn than the area of the third evaporation element (16).

4. A device according to Claim 2, wherein the left part of the longitudinal wall (14) has a slot-shaped opening at the bottom, the length of the passage (3) in the middle partition (2) corresponds to the width of the container, and the shorter leg of the third evaporation element (12) is designed to that it does not dip into the liquid level (8) of the dispensing chamber (4) when the container is tilted, especially in transport.

5. A device according to Claim 2, wherein the longer leg of the third evaporation element (12) is designed with a right-angled bend, with the bent part of the leg being arranged directly beneath the longer leg of the second evaporation element, and with the longer leg of the second evaporation element (11) being shortened so that the two evaporation elements (12) do not come in contact with one another, and the liquid (10) for evaporation can drip down from the longer leg of the second evaporation element (11).

6. A device according to Claim 2, wherein the dispensing chamber (4) and the evaporation chamber (5) are covered by a protective hood (15), which is detachably connected to the container housing, preferably by catch and clamp elements, and it has openings in a number such that a maximum amount of vaporized liquid can pass through, and its dimensions are such that direct contact of the bees with the evaporation elements (11, 12, 13) is prevented.

7. A device according to Claim 2, wherein vertical ribs are provided in the interspace between the front and rear longitudinal walls of the dispensing chamber (4) and evaporation chamber (5) when the dispensing and evaporation chambers (4, 5) are open at the top, and/or between the front and rear inner walls of the protective hood (15) and the evaporation elements (13, 11 and 12), said ribs extending to the top edge (14a) of the longitudinal walls of the dispensing chamber and evaporation chambers (4, 5) or to the top edge of the protective hood (15), said ribs (15a) being designed as a detachable one-piece spacer element (14b) or molded on the front and rear insides of the longitudinal walls and/or the protective hood (15).

8. A device according to Claim 3, wherein the cover is an acid-resistant plastic film (18), an acid-resistant dividing plate (23) or an acid-resistant plastic film (18) with gauze (19) arranged below it, with the area of the gauze (19) being larger than the area of the plastic film (18) or the dividing plate (23).

9. A device according to Claims 3 and 8 for use in back-treatment beehives, wherein the device is arranged on the lower leg (26) of an empty honeycomb frame (25), and the third evaporation element (16) under the spacer plate (17) and the container is sealed with a plastic film (18) on a longitudinal side approximately flush with the leg (26) of the empty honeycomb frame (25), said element being bent at an angle on the opposite longitudinal side and continued vertically upward, with the plastic film (18) having openings in a number such that a maximum amount of vaporized liquid can pass through and the dimensions are such that direct contact of the bees with the third evaporation element (16) is prevented.

10. A device according to Claim 2 or 3, wherein the surface of the second evaporation element (11), except the end face of the leg, is provided with an acid-resistant coating or cover that is impermeable for the liquid (10) for evaporation.

11. A device according to Claim 2 or 3 or 10, wherein the coating is a plastic or an enamel.

12. A device according to Claim 2 or 3, wherein the cross section through the second evaporation element (11) is preferably adjustable or variable in the horizontal middle part.

13. A device according to Claim 2 or 3 and 12, wherein the second evaporation element (11) consists of two individual L-shaped elements whose short legs are arranged so that they overlap in an area, and at least one individual element is horizontally displaceable, and the short leg of the one individual element runs at a right angle and that of the other individual element is at an inclination.

14. A device according to Claim 2 or 3, wherein the first and second evaporation elements (13, 11) are designed in one piece.

15. A device according to Claim 2 or 3, 5 as well as 10 through 14, wherein the cross-sectional area of the evaporation elements (11, 12, 13) is regular, especially triangular, rectangular, polygonal, circular, annular, sector-shaped, arc-shaped, ellipsoidal, or it may be irregular.

16. A device according to Claim 2 or 3, 5 as well as 10 through 14, wherein the absorbent material of the evaporation elements (11, 12, 13, 16) is made of organic or inorganic materials or mixtures thereof.

17. A device according to Claim 2 or 3, 5 as well as 10 through 14 and 16, wherein the absorbent material of the evaporation elements (11, 12, 113, 16) is paper, cardboard, ceramic, foam and a woven or nonwoven textile material such as a felt, a nonwoven or spun yarn.

18. A device according to Claim 2 or 3, wherein the container is made of acid-resistant and weldable plastics, preferably polypropylene.

19. A device according to Claim 2 or 3, wherein the container is designed so that it can be tilted by providing a height adjusting device (21) on the left side wall of the storage chamber (1).

20. A device according to Claim 2 or 3, wherein the width of the container is not greater than the width of a honeycomb frame.

21. A device according to Claim 2 or 3, wherein the container is an injection molded part which has a scale for measuring the quantity of liquid (10) to be evaporated in the storage chamber (1), preferably on the cover of the storage chamber (10, and the cover is connected to the housing of the storage chamber (1) by welding with an airtight seal.

22. A device according to Claim 2 or 3, 5 as well as 10 through 14, wherein the evaporation elements (11, 12, 13) are arranged at any angle, even variably, to the vertical axis or the horizontal axis of the container.

## Revendications

1. Procédé pour l'évaporation de liquides, notamment de l'acide formique, pour la lutte contre les varroas vivant dans des ruches, **caractérisé par le fait** que
- un niveau constant de liquide d'évaporation est généré dans un réservoir ;
- le courant capillaire principal composé de liquide d'évaporation se formant dans l'élément d'évaporation plongé dans le liquide d'évaporation est séparé en deux courants capillaires partiels ;
- le premier courant capillaire partiel est guidé vers le haut à la verticale du liquide d'évaporation ;
- le second courant capillaire partiel est d'abord dévié verticalement vers le haut, ensuite horizontalement et après verticalement vers le bas dans un domaine se trouvant plus bas que le niveau du liquide d'évaporation et qu'un effet d'aspiration est généré à cet endroit-là ;
- la quantité de liquide est maintenue par unité de temps du premier courant capillaire partiel, de façon susceptible à être modifiée, en fonction des contraintes dues à l'environnement, telles la pression atmosphérique, l'humidité de l'air, la circulation de l'air et la température
et
- la quantité de liquide est maintenue de façon constante par unité de temps du second courant capillaire partiel.

2. Dispositif pour l'évaporation de liquides, notamment de l'acide formique, pour la lutte contre les varroas vivant dans des ruches, se composant d'un réservoir essentiellement parallélépipédique subdivisé par une paroi médiane (2) verticale en deux parties de réservoir se trouvant à un plan horizontal, la première partie de réservoir étant configurée en chambre de stockage (1) fermée de tous les côtés destinée à recevoir le liquide d'évaporation (10), la deuxième partie de réservoir étant étagée et pourvue d'un élément d'évaporation (13) dont le face frontale inférieure repose sur la surface au sol, et les deux parties de réservoir étant reliées l'une à l'autre par l'intermédiaire d'une ouverture de passage (3) en forme de fente située dans la partie inférieure de la paroi médiane (2) verticale, **caractérisé par le fait** qu'une troisième partie de réservoir est raccordée en tant que chambre d'évaporation (5) dans le sens longitudinal à la deuxième partie de réservoir, chambre d'évaporation étant séparée spatialement de la deuxième partie de réservoir par une paroi transversale (6) continue, la surface au sol de la chambre d'évaporation (5) se trouvant essentiellement plus bas que la surface au sol commune de la chambre de stockage (1) et de la deuxième partie de réservoir et une paroi longitudinale (14) s'étirant de la paroi médiane (2) verticale jusqu'à la paroi latérale droite de la chambre d'évaporation (5) dont la partie gauche est menée jusqu'à la surface au sol de la deuxième partie de réservoir en formant une chambre de dosage (4) pour le liquide d'évaporation (10) et la longueur de l'ouverture de passage (3) en forme de fente étant configurée dans la paroi médiane (2) en fonction de la largeur de la chambre de dosage (4) et la partie droite de la paroi longitudinale (14) étant pourvue dans le domaine inférieur d'une ouverture en forme de fente dont la largeur est supérieure au niveau de liquide (9) dans la chambre d'évaporation (5) et que le premier élément d'évaporation (13) et, s'alignant à côté de celui-ci, un deuxième élément d'évaporation (11) en forme de U aux branches inégales sont disposés verticalement devant la paroi longitudinale (14), la branche gauche s'appuyant sur la surface au sol de la chambre de dosage (4) étant essentiellement plus courte que la branche droite s'appuyant sur la surface au sol de la chambre d'évaporation (5) et un troisième élément d'évaporation (12) étant disposé verticalement derrière la paroi longitudinale (14), élément présentant pour l'essentiel la même forme que le deuxième élément d'évaporation (11) et dont la branche la plus longue repose également sur la surface au sol de la chambre d'évaporation (5) ainsi que tous les éléments d'évaporation (13, 11, 12) sont positionnés par l'intermédiaire de sections à nervures configurées sur les surfaces au sol.

3. Dispositif pour l'évaporation de liquides, notamment de l'acide formique, pour la lutte contre les varroas vivant dans des ruches, se composant d'un réservoir essentiellement parallélépipédique subdivisé par une paroi médiane (2) verticale en deux parties de réservoir se trouvant dans un plan horizontal, la première partie de réservoir étant configurée en chambre de stockage (1) fermée de tous les côtés destinée à recevoir le liquide d'évaporation (10), la deuxième partie de réservoir étant étagée et pourvue d'un élément d'évaporation (13) dont la face frontale inférieure repose sur la surface au sol, et les deux parties de réservoir étant reliées l'une à l'autre dans la partie inférieure de la paroi médiane (2) verticale par l'intermédiaire d'une ouverture de passage (3) en forme de fente, **caractérisé par le fait** que la deuxième partie de réservoir est délimitée dans le sens longitudinal par une paroi transversale (6) continue formant une chambre de dosage (4) pour le liquide d'évaporation (10) dans laquelle un deuxième élément d'évaporation (11) ayant une forme en U aux branches inégales est disposé verticalement en s'alignant à côté du premier élément d'évaporation (13), la branche gauche s'appuyant sur la surface au sol de la chambre de dosage (4) étant essentiellement plus courte que la branche droite et la partie inférieure de la paroi transversale (6) étant reliée à une plaque d'écartement horizontale (17) qui se trouve essentiellement plus bas que la surface au sol commune de la chambre de stockage (1) et la chambre de dosage (4), la branche la plus longue de l'élément d'évaporation (11) reposant sur la plaque d'écartement (17) qui est au moins pourvue dans le domaine d'appui de la branche la plus longue d'ouvertures en forme de passoire destinées au passage du liquide et qu'un troisième élément d'évaporation (16) est disposé horizontalement sous la plaque d'écartement (17) et le réservoir, élément dont la surface est supérieure à la surface de base du réservoir, un recouvrement étant à son tour plus grand que la surface du troisième élément d'évaporation (16) étant prévu sous le troisième élément d'évaporation (16).

4. Dispositif selon la revendication 2, **caractérisé par le fait** que la partie gauche de la paroi longitudinale (14) présente en dessous une ouverture en forme de fente, la longueur de l'ouverture de passage (3) située dans la paroi médiane (2) correspond à la largeur du réservoir et la branche la plus courte du troisième élément d'évaporation (12) est dimensionnée de telle façon qu'elle ne plonge pas dans le niveau de liquide (8) de la chambre de dosage (4) lorsque le réservoir est basculé, notamment lorsqu'il est transporté.

5. Dispositif selon la revendication 2, **caractérisé par le fait** que la branche la plus longue du troisième élément d'évaporation (12) a une configuration à angles droits, la partie de branche pliée en U est disposée directement sous la branche la plus longue du deuxième élément d'évaporation (11) et la branche la plus longue du deuxième élément d'évaporation (11) est raccourcie de telle façon que les deux éléments d'évaporation (11, 12) ne se touchent pas et que le liquide d'évaporation (10) peut s'écouler de la branche la plus longue du deuxième élément d'évaporation (11).

6. Dispositif selon la revendication 2, **caractérisé par le fait** que la chambre de dosage (4) et la chambre d'évaporation (5) est recouverte par une chape (15) qui est reliée de façon susceptible d'être enlevée au bâti du réservoir, de préférence par des éléments d'enclenchement et de serrage et qui présente des ouvertures dont le nombre est étudié de façon à ce qu'une quantité maximale de liquide évaporé puisse pénétrer à l'intérieur et dont les dimensions sont choisies de façon à ce qu'un contact direct des abeilles avec les éléments d'évaporation (11, 12, 13) soit empêché.

7. Dispositif selon la revendication 2, **caractérisé par le fait**, lorsque la chambre de dosage (4) ainsi que la chambre d'évaporation (5) sont ouvertes en haut, des nervures verticales (15a) sont prévues dans l'espace intermédiaire situé entre la paroi longitudinale avant et la paroi longitudinale arrière respectivement de la chambre de dosage et de la chambre d'évaporation (4, 5) et/ou la paroi intérieure avant et la paroi intérieure arrière respectivement de la chape (15) et des éléments d'évaporation (13, 11 et 12 respectivement), nervures étant menées jusqu'au bord supérieur (14a) des parois longitudinales de la chambre de dosage et de la chambre d'évaporation (4, 5) ou jusqu'au bord supérieur de la chape (15), les nervures (15a) étant configurées en élément d'écartement (14b) en une seule pièce disposé de façon susceptible à être enlevé ou étant formées au niveau des parois intérieures avant et arrière des parois longitudinales et/ou de la chape (15).

8. Dispositif selon la revendication 3, **caractérisé par le fait** que le recouvrement est un film plastique (18) résistant à l'acide, une plaque de séparation (23) résistante à l'acide ou un film plastique (18) résistant à l'acide muni d'une gaze (19) disposée au-dessous, la surface de la gaze (19) étant plus grande que le film plastique (18) et la plaque de séparation (23) respectivement.

9. Dispositif selon la revendication 3 et 8 pour l'utilisation dans des ruches à traitement par l'arrière, **caractérisé par le fait** que le dispositif est disposé sur le montant inférieur (26) d'un cadre vide (25) et le troisième élément d'évaporation (16) se trouvant sous la plaque d'écartement (17) et le réservoir se referme sur le film plastique (18) sur l'un des côtés longitudinaux en affleurant à peu près le montant (26) du cadre vide (25) et que ceux-ci sont menés du côté longitudinal opposé verticalement vers le haut et en formant un U, le film plastique (18) présentant des ouvertures dont le nombre est étudié de façon à ce qu'une quantité maximale de liquide évaporé puisse y pénétrer et dont les dimensions sont choisies de façon à ce qu'un contact direct des abeilles avec le troisième élément d'évaporation (16) soit empêché.

10. Dispositif selon la revendication 2 ou 3, **caractérisé par le fait** que la surface du deuxième élément d'évaporation (11) est pourvue, à l'exception de la face frontale des branches, d'un revêtement ou d'un recouvrement résistant à l'acide et imperméable au liquide d'évaporation (10).

11. Dispositif selon la revendication 2 ou 3 et 10, **caractérisé par le fait** que le revêtement est un vernis ou un plastique.

12. Dispositif selon la revendication 2 ou 3, **caractérisé par le fait** que la coupe transversale du deuxième élément d'évaporation (11) est susceptible d'être modifiée et réglée respectivement, de préférence dans la partie médiane horizontale.

13. Dispositif selon la revendication 2 ou 3 et 12, **caractérisé par le fait** que le deuxième élément d'évaporation (11) se compose de deux éléments séparés en forme de L dont les courtes branches sont disposées en se chevauchant dans un domaine et qu'au moins un élément séparé est susceptible d'être coulissé horizontalement ainsi que la courte branche de l'un des éléments séparés s'étend orthogonalement et celle de l'autre élément séparé s'étend diamétralement.

14. Dispositif selon la revendication 2 ou 3, **caractérisé par le fait** que le premier et le deuxième élément d'évaporation (13, 11) sont configurés en une seule pièce.

15. Dispositif selon la revendication 2 ou 3, 5 ainsi que 10 à 14, **caractérisé par le fait** que la surface de la coupe transversale des éléments d'évaporation (11, 12, 13) est régulière, notamment triangulaire, carrée, polygonale, en forme de cercle, en forme d'anneau de cercle, en forme de secteur de cercle, en forme de segment de cercle, en forme d'ellipse ou irrégulière.

16. Dispositif selon la revendication 2 ou 3, 5 ainsi que 10 à 14, **caractérisé par le fait que** la matière absorbante des éléments d'évaporation (11, 12, 13, 16) se compose de substances organiques et inorganiques ou de mélanges de celles-ci.

17. Dispositif selon la revendication 2 ou 3, 5, 10 à 14 ainsi que 16, **caractérisé par le fait** que la matière absorbante des éléments d'évaporation (11, 12, 13, 16) est du papier, du carton, de la céramique, un produit alvéolaire ainsi qu'un produit textile tissé ou non tissé, tels que du feutre, une nappe de fibres, des fils.

18. Dispositif selon la revendication 2 ou 3, **caractérisé par le fait** que le réservoir se compose de matières synthétiques résistantes à l'acide et susceptibles d'être soudées, de préférence de polypropylène.

19. Dispositif selon la revendication 2 ou 3, **caractérisé par le fait** que le réservoir est configuré de façon susceptible de basculer grâce à une disposition de dispositif de réglage en hauteur (21) situé au niveau de la paroi latérale gauche de la chambre de stockage (1).

20. Dispositif selon la revendication 2 ou 3, **caractérisé par le fait** que la largeur du réservoir n'est pas supérieure à la largeur d'un cadre.

21. Dispositif selon la revendication 2 ou 3, **caractérisé par le fait** que le réservoir est une pièce moulée par injection qui porte une échelle destinée à mesurer la quantité de liquide d'évaporation (10) dans la chambre de stockage (1), de préférence au niveau du couvercle de la chambre de stockage (1), et le couvercle est relié par soudage hermétiquement au bâti de la chambre de stockage (1).

22. Dispositif selon la revendication 2 ou 3, 5, 10 à 14, 16 et 17, **caractérisé par le fait** que les éléments d'évaporation (11, 12, 13) sont disposés dans un angle choisi librement également susceptible d'être modifié par rapport à l'axe vertical et à l'axe horizontal respectivement du réservoir.
